# EUROPÄISCHE PATENTSCHRIFT

(11) **EP 1 389 329 B1**
(45) Veröffentlichungstag und Bekanntmachung des Hinweises auf die Patenterteilung: **05.10.2005**
(21) Anmeldenummer: 02730102.7
(22) Anmeldetag: 04.04.2002
(51) Int. Cl.: G06K 15/00, H04N 1/32

(54) **VERFAHREN, SYSTEM UND COMPUTERPROGRAMM ZUM ERSTELLEN EINES ELEKTRONISCHEN DOKUMENTS AUS GERASTERTEN BILDDATEN**
METHOD, SYSTEM AND COMPUTER PROGRAMME FOR THE GENERATION OF AN ELECTRONIC DOCUMENT FROM SCANNED IMAGE DATA
PROCEDE, SYSTEME, ET PROGRAMME INFORMATIQUE DESTINES A PRODUIRE UN DOCUMENT ELECTRONIQUE A PARTIR DE DONNEES D'IMAGE TRAMEES

(30) Priorität: 06.04.2001 DE 10117349
(43) Veröffentlichungstag der Anmeldung: 18.02.2004
(73) Patentinhaber: OCE Printing Systems GmbH, 85586 Poing (DE)
(72) Erfinder: WEGELE, Petra, 80339 München (DE)
(74) Vertreter: Schaumburg, Thoenes, Thurn, Landskron
(86) Internationale Anmeldenummer: PCT/EP2002/003754
(87) Internationale Veröffentlichungsnummer: WO 2002/082362

(56) Entgegenhaltungen:
- EP-A- 0 849 701
- DE-A- 19 852 296
- US-A- 4 826 333
- US-A- 5 104 245
- US-A- 5 751 924

## Beschreibung

Die Erfindung betrifft ein Verfahren, ein Drucksystem, ein Computersystem und ein Computerprogramm zum Erstellen eines elektronischen Dokuments aus gerasterten Bilddaten.

Die Erfindung betrifft insbesondere ein System, bei dem elektronische Dokumente seitenweise aus gerasterten Bilddaten aufgebaut werden. Die Bilddaten können beispielsweise erzeugt werden, indem Vorlagen abgetastet (gescannt) werden und die dabei erzeugten Bilddaten in einem elektronischen Speicher seiten- und bildpunktweise abgelegt werden. Die Daten können jedoch genauso gut vollelektronisch erzeugt werden, d.h. auf einem elektronischen Gerät wie z.B. einem Computer erzeugt und/oder gerastert werden.

Aus der US-A-5,666,503 ist ein Verfahren und ein System zum Bearbeiten strukturierter Bilder in elektronisch gespeicherten Dokumente bekannt.

Zur Bearbeitung von Dokumenten, die seitenweise in gerasterten Bildformaten vorliegen, sind Raster-Editorprogramme bekannt. Ein solches Programm ist beispielsweise von der Firma Techsoft AS, Sandefjord, Norwegen unter dem Handelsnamen Pixedit® erhältlich.

In der Veröffentlichung "The World of Printers", Dr. Gerd Goldmann (Hsg.). Ausgabe 5 (Juni 2000), Océ Printing Systems GmbH (Poing), ISBN 3-00-001081-5, ist im Kapitel 11 ein sogenanntes PRISMApro Server System beschrieben, das zur Erstellung elektronischer Dokumente und zur Aufbereitung der Dokumente für ein Hochgeschwindigkeits-Digitaldrucksysteme dient. In der WO 00/68877 A1 ist ein Verfahren und ein System zum Ausschießen von Druckdaten beschrieben, das zur Aufbereitung von Druckdaten für ein derartiges Hochgeschwindigkeits-Drucksystem geeignet ist.

Aus der US-A-4,944,614 ist eine Druckeinrichtung zum Drukken von Overlay-Formaten bekannt. In einem Speicher werden sich wiederholende feste Bilddaten und variable Bilddaten gespeichert. Weiterhin enthält die Druckeinrichtung einen Format-Speicher, in welchem Bilddaten entsprechend einem Formular für jede Dokumentenseite gespeichert sind. Die Bilddaten des Format-Speichers, die festen Bilddaten sowie die variablen Bilddaten werden zum Druck miteinander kombiniert.

Aus EP-A-0 849 701 ist ein Verfahren zum Erstellen eines elektronischen Dokuments aus gerasterten Bilddaten bekannt, die seitenweise gespeichert sind. Eine Vielzahl von Formularen sind in einem Host-Computer gespeichert, die mit Hilfe von Seitendaten überlagert und gedruckt werden können.

Als weiterer Stand der Technik wird noch auf die Dokumente WO 00/68877 derselben Anmelderin sowie JP 07182321 A und US-A-5,715,382 verwiesen.

Es ist Aufgabe der vorliegenden Erfindung, eine sichere und schnelle Verarbeitung von gerasterten Bilddaten bei der Zusammenstellung eines elektronischen Dokuments zu erreichen.

Diese Aufgabe wird mit der in den unabhängigen Ansprüchen beschriebenen Erfindung gelöst. Vorteilhafte Ausführungsformen der Erfindung sind Gegenstand der Unteransprüche.

Gemäß einem ersten Aspekt der Erfindung wird einer ersten Gruppe von Bilddaten, die mehrere Seiten umfaßt, eine zweite Bilddatengruppe derart zugeordnet, daß die erste Gruppe unabhängig von der zweiten Gruppe in dem Speicher gespeichert wird oder zu einem Speicher übertragen wird. Die beiden Gruppen von Bilddaten werden bei einer Anzeige oder bei einem Ausdruck einer einzelnen Seite des Dokuments überlagert. Diese Überlagerung kann insbesondere in einem besonderen Speicher erfolgen. Die zweite Gruppe von Bilddaten können insbesondere mehrere sogenannte Overlays sein, die jeweils derart aufgebaut sind, daß sie innerhalb einer einzigen Seite der jeweils ersten Gruppe zu positionieren sind. Die Overlays umfassen dabei jeweils eine Information, die innerhalb einer Seite der ersten Bilddaten positioniert wird, beispielsweise eine Textpassage, ein Bild oder ein Logo. Die Overlay-Daten können weiterhin insbesondere Größen- und/oder Positionsinformationen zugeordnet sein, die die jeweilige, genaue Position und/oder Größe des Overlays in den ersten Bilddaten bzw. innerhalb der Seite bei der Überlagerung festlegen.

Gemäß der Erfindung erfolgt die logische Zuordnung der Bildinformation zwischen einem Overlay und den entsprechenden Bilddaten der ersten Gruppe nach der Relation 1 : n und/oder nach der Relation m : 1, wobei n und m jeweils ganze Zahlen größer als 2 sind.

Gemäß einem weiteren Aspekt der Erfindung, ist zur Bearbeitung des Dokuments ein erster Bereich an einer Anzeigevorrichtung, z.B. an einem Bildschirm, vorgesehen, in dem in einer baumartigen Struktur die jeweiligen Datei-Namen der jeweiligen Bilddaten angezeigt sind (sogenannter Baumstruktur-Hereich). In einem zweiten, sogenannten viewing-Bereich der Anzeigevorrichtung sind die zugehörigen Bilddaten im Detail anzeigbar. Die jeweilige Anzeige wird insbesondere computergesteuert bewirkt. In der ersten, baumartigen Anzeige-Struktur ist insbesondere vorgesehen, zumindest bei Berührung des angezeigten Dateinamens mit einem Auswahlmittel wie einem Mauszeiger zusätzliche Informationen anzuzeigen. Als zusätzliche Information kann insbesondere vorgesehen sein, in einem verkleinerten Sonderfenster, einem sogenanntem Thumbnail, die Bilddaten darzustellen und/oder Informationen über zugeordnete Overlay-Daten und/oder über zugeordnete Sonderfunktionen wie z.B. automatisierte Programme (Batches oder Makros) anzuzeigen.

Weiterhin kann dabei insbesondere vorgesehen sein, die Anzeige der Bilddaten im zweiten Anzeigebereich (viewing-Bereich) nur dann zu bewirken, wenn die entsprechende Seite im Baumstruktur-Bereich gesondert ausgewählt ist, beispielsweise durch Doppelklick mit einer Maus. Die Anzeige im viewing-Bereich erfolgt insbesondere mit einer derart hohen Auflösung, daß die Bildinformationen bei Betrachtung mit dem menschlichen Auge aus durchschnittlichem Sehabstand (ca. 25 cm) leicht erkennbar ist.

Gemäß einem weiteren Aspekt der Erfindung, ist das Dokumentenbearbeitungssystem mit einem Druckproduktionssteuerungssystem verbunden. Die Verbindung erfolgt insbesondere derart, daß Overlay-Informationen, die in dem Dokumentenproduktionssystem gespeichert sind, direkt von dem Druckprodunktions-Steuerungssystem übernommen werden können, wobei Overlay-Daten pro Dokument nur einmal an das Druckproduktions-Steuerungssystem übertragen werden müssen und die Zuordnung der Overlay-Daten zu den jeweiligen seitenweisen Daten des Dokuments über Referenzierungen erfolgt, die ebenfalls jeweils nur einmal übertragen werden müssen. Die Übertragungsgeschwindigkeit vom Dokumentenerzeugungs- bzw. Bearbeitungssystem zu dem Druckproduktions-System bzw. zum letztendlich den Druckvorgang ausführenden Druckgerät ist dann mit hoher Geschwindigkeit und geringstem Datenvolumen bei voller Informationswiedergabe möglich.

In einer, bevorzugten Ausführungsform des zuletzt genannten Aspekts der Erfindung sind mit dem Starten eines Druckauftrags druckspezifische Daten übergebbar, wie beispielsweise Seitenzusammensetzungsdaten (page composition data), die Ausgabe über simplex-Druck, duplex-Druck oder dergleichen enthalten. Zusätzlich können auch weitere Druckproduktionsdaten übertragen werden, die zur Erstellung eines Dokuments relevant sind, beispielsweise Angaben über die Weiterverarbeitung gedruckter Seiten zum Heften, Binden oder dergleichen.

In einem weiteren Aspekt der Erfindung, werden jeweils mehrere Seiten bzw. deren Bilddaten zu einer Gruppe (Range) zusammengefaßt und innerhalb der Gruppe von Bilddaten bzw. des Ranges eine Untergruppe von Bilddaten (subRange) gebildet. Den jeweiligen Hauptgruppen (Ranges) und Untergruppen (subRanges) werden dann Hauptbearbeitungsprozesse bzw. untergeordnete Bearbeitungsprozesse zugeordnet, die auf ein bestimmtes Kommando derart ausgeführt werden können, daß die Hauptprozesse nur auf die Hauptgruppen und die Unterprozesse nur auf die Untergruppen wirken. Derartige Bearbeitungsprozesse können beispielsweise das automatische Numerieren von Seiten oder die Beseitigung von Bildstörungen sein.

Nachfolgend werden weitere Aspekte und Ausführungsformen der Erfindung beschrieben, aus denen zusätzliche Vorteile der Erfindung deutlich werden.

Es zeigen:
Figur 1: Ein Dokumenterstellungs- und Drucksystem,
Figur 2: Erste Systemkomponenten,
Figur 3: Zweite Systemkomponenten,
Figur 4: Dritte Systemkomponenten,
Figur 5: Ein Dokumentbearbeitungsmenü,
Figur 6: Verschiedene Dokumenten-Baumstrukturen,
Figur 7: Baumstrukturen mit Markierungen,
Figur 8: Ein Auswahlmenü,
Figur 9: Eine Overlay Struktur,
Figur 10: Das Schema einer Datenübertragung,
Figur 11: Ein Auswahlmenü zur Zuordnung von Overlays,
Figur 12: Ein Auswahlmenü zur Zuordnung von Automatik-Prozes- sen,
Figur 13: Ein Auswahlmenü für ein Drucküberwachungssystem,
Figur 14: Ein Auswahlmenü für Druckproduktionsparameter.

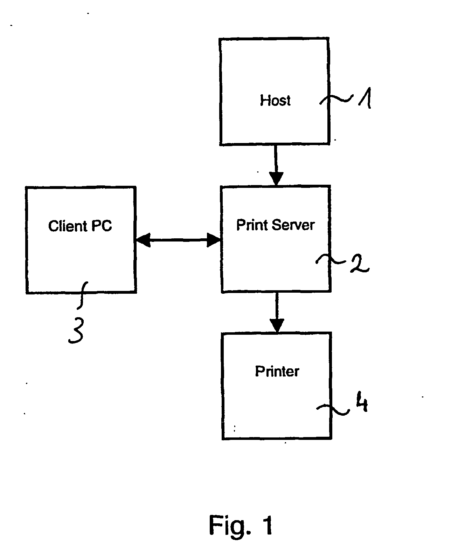

Figur 1 zeigt ein Drucksystem, bei dem elektronische Dokumente von einer Druckdatenquelle 1 an einen Druckserver 2 übertragen werden. Die Druckdatenquelle 1 kann beispielsweise ein Host-Computer sein , in dem die Dokumente in einer Druckdatensprache wie Postscript, Page Command Language (PCL), Advanced Function Presentation (AFP) oder dergleichen vorliegt. Die derart übertragenen Daten werden im Druckserver 2 aufgerastert, d.h. seitenweise in bildpunktweise Daten (Bitmap Daten) umgesetzt. Dabei können Datenformate wie Graphics Interchange Format (GIF), Taped Image File Format (TIFF) ,oder andere Bitmap-Daten erzeugt werden. Statt eines Host-Computers kann die Datenquelle 1 auch ein Scanner sein, der physikalisch vorliegende Dokumente, beispielsweise Papierseiten, abtastet und daraus elektronische Daten erzeugt, die dann als Bitmap-Daten an den Druckserver 2 übertragen werden.

Mit dem Druckserver 2 ist ein Anwendungscomputer (Personal Computer, PC) 3 verbunden, an dem die im Druckserver 2 gespeicherten, aufgerasterten seitenweisen Dokumentendaten bearbeitet werden können.

Die derart bearbeiteteten Dokumentendaten werden dann im Druckserver 2 derart aufbereitet, daß sie zur Ausgabe an einen Drucker 4 geeignet sind. Die Verbindungen zwischen den einzelnen Geräten 1, 2, 3 und 4 können dabei wahlweise entweder einzelne, direkte Verbindungen über Datenleitungen sein oder auch Netzwerkverbindungen über ein Local Area Network (LAN) oder ein Wide Area Network (WAN) wie z.B. das Internet.

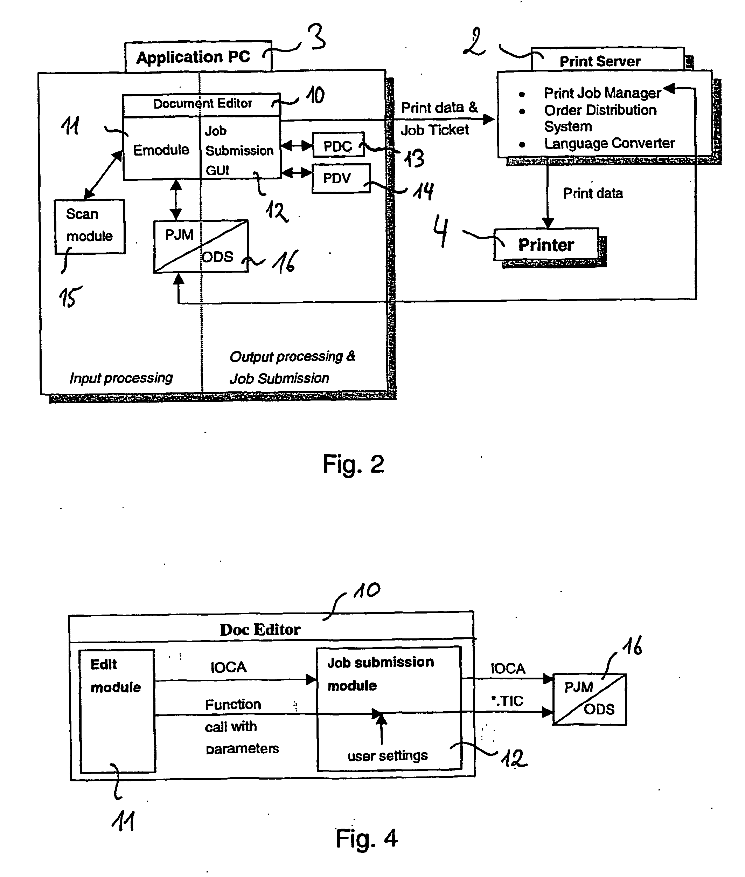

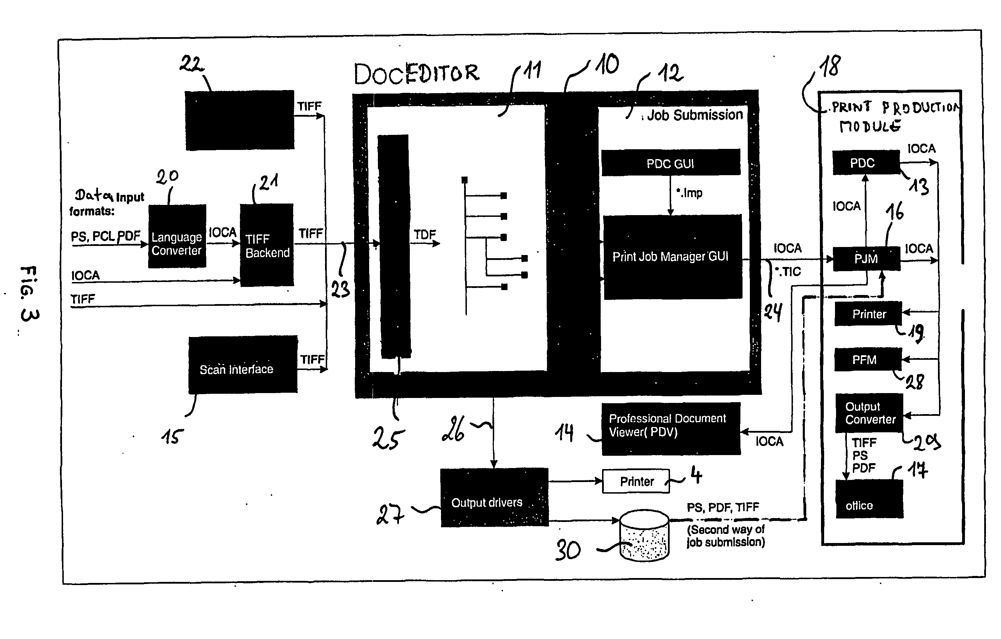

In Figur 2 sind Anwender-PC 3, Druckserver 2 und Drucker 4 nochmals gezeigt, wobei verschiedene Systemmodule, d.h. auf den jeweiligen Geräten installierte Softwareprogramme sowie deren funktionelle Verbindungen gezeigt sind.

Zentrales Softwaremodul im Anwender-PC 3 ist ein Dokumenteneditor 10, der einerseits ein Editierungsmodul 11 und andererseits ein grafisches Benutzerinterface 12 enthält, mit dem bearbeitete Dokumente an weitere Bearbeitungsmodule wie an ein Ausschießmodul 13 (Professional Document Composer, PDC) oder ein externes Anzeigeprogramm (Professional Document Viewer, PDV) übertragen werden kann.

Ein Verfahren und ein System zum Ausschießen von Druckdaten, das in einem entsprechenden Ausschießmodul 13 ablaufen kann, ist beispielsweise in der WO 00/68877 A1 beschrieben. Auch in dem eingangs genannten Buch "The World of Printers" (ISBN 3-00-001081-5) sind auf den Seiten 11-15 bis 11-18 unter der Überschrift "PRISMA+PoD" weitere Einzelheiten des Professional Document Composers 13 beschrieben.

Der Dokumenteditor 10 kann auch direkt mit einem Scanmodul 15 zusammenwirken, mit dem ein an sich bekannter Scanner (Abtastgerät) betrieben bzw. dessen Daten in den Dokumenteditor 10 direkt eingelesen werden können.

Im Anwender-PC läuft außerdem ein Druckausgabemodul 16, mit dem Daten aus dem Dokumenteditor derart aufbereitet werden, daß sie über den Druckserver. 2 mit hoher Geschwindigkeit druckerangepaßt an den Drucker 4 ausgegeben werden können. Dieses Printjob-Manager-Modul 16 (PJM) ist mit einem Auftragsverarbeitungssystem (order distribution system, ODS) verbunden. Beide Module sind auch im Druckserver 2 installiert, so daß eine Verbindung zwischen Anwender-PC 3 und Druckserver 2 ermöglicht wird. In Druckserver 2 ist des weiteren ein Sprachkonverter enthalten, der die Druckdaten zur Ausgabe an den Drucker 4 umwandelt. Der Print Job Manager 16 erzeugt zu jedem Druckauftrag ein sogenanntes job ticket auf einer beliebigen, an einem Netzwerk angeschlossenen Kundenkonsole (Client PC 3) und sendet das job ticket über das Netzwerk an das order distribution system. Es ist möglich, mittels des PJM 16 verschiedene Ressourcen (z.B. Druckdaten für reprints, job tickets, overlay marks, variable data sets) eines AFP-Datenstroms (advanced variable data stream) im System zu erzeugen und am System zu hinterlegen. Darüber hinaus kann auch der Satus der jobs im System überwacht werden.

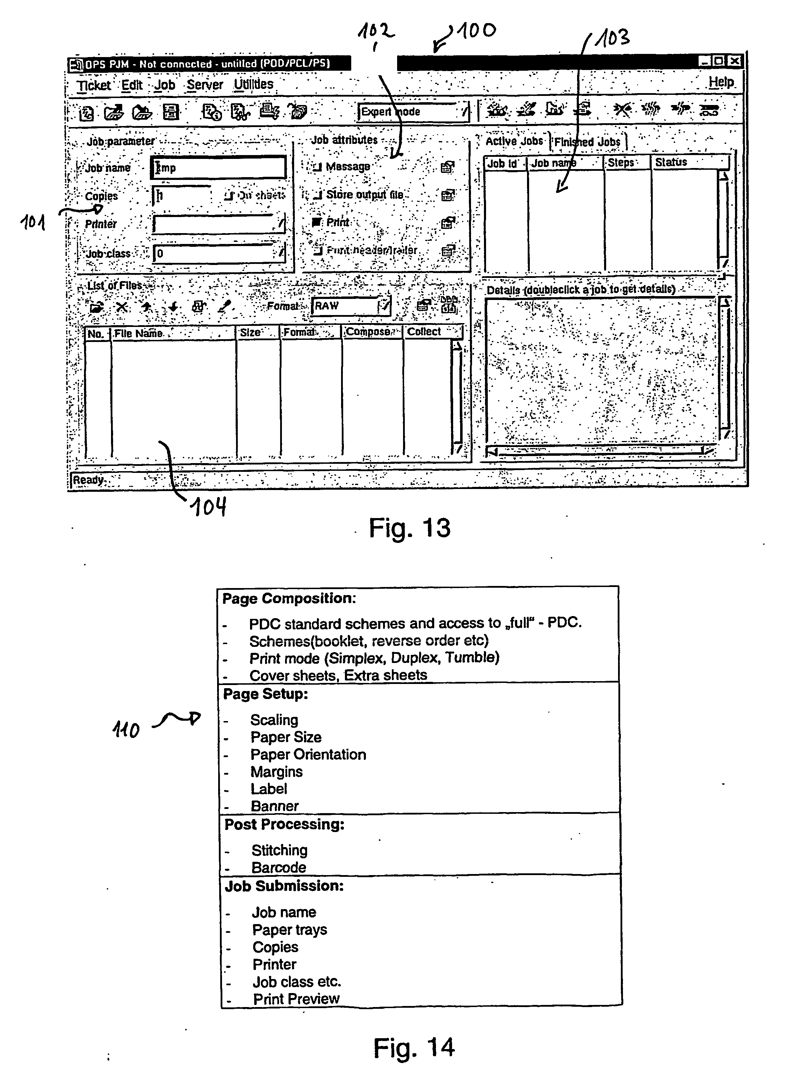

Weitere Details des Print Job Manager Moduls 16 und des damit zusammenwirkenden order distribution Systems werden später noch im Zusammenhang mit Figuren 13 und 14 beschrieben. Auch in der eingangs genannten Veröffentlichung "The World of Printers (ISBN 3-00-001081-5) im Kapitel 11 (insbesondere auf den Seiten 11-11 bis 11-15) sind weitere Details des Print Job Manager Moduls 16 beschrieben.

In Figur 3 sind die Systemkomponenten etwas mehr im Detail gezeigt, wobei auch die jeweiligen, verarbeitbaren Datenformate angegeben sind. Eingangsseitig sind verschiedene Module vorgesehen, in denen die jeweiligen Eingangsdaten entweder direkt oder stufenweise auf das TIFF Format konvertiert werden. Über einen ersten Dateneingang werden Standarddrucksprachen bzw. -formaten wie Postscript (PS), Printer Control Language (PCL) oder Portable Document Format (PDF) einem Sprachkonverter 20 zugeführt, der Daten in das Datenformat Image Object Content Architecture (IOCA) umwandelt. Diese Daten werden dann einem TIFF-Datenkonverter 21 zugeführt, der aus den IOCA-Daten Tagged Image File-Daten (TIFF) bildet. Zusätzlich können TIFF-Daten direkt über ein TIFF Eingangsmodul 22 oder über das vorher bereits genannte Scanningmodul 15 in den Dokumenteneditor 10 eingelesen werden.

Die am Dateneingang 23 eingelesenen TIFF-Daten werden im Konvertierungsmodul 25 in ein internes (temporäres) Datenformat "TDF" im Editormodul 11 konvertiert. Dieses Modul kann andererseits aus den internen Datenformat TDF wiederum IOCA-Daten erzeugen sowie Parameter, die an das Job-Submission Modul 12 übergeben werden. Zum Ausdruck von Daten aus dem Dokumenteneditor 10 besteht entweder die Möglichkeit, Daten über die Ausgabeschnittstelle 26 an herkömmliche Druckertreiber 27 zu übergeben, oder die IOCA-Daten an den Datenausgang 24 zum Printjob Manager-Modul 16 des Druckproduktionsmoduls 18 zu übergeben. Innerhalb des Druckproduktionsmoduls 18 sind verschiedene Module vorgesehen, mit denen die Dokumentendaten entweder zur Ausgabe an einen Drucker oder zur Weitergabe an ein anderes Anwendungsprogramm vorbereitet werden. Dazu zählen der Professional Document Composer 13, mit dem ein Ausschießschema und andere zum Ausschießen benötigten Parameter festlegbar sind, der Printjob Manager 16, mit dem die Auftragsdaten verwaltet werden, sowie ein Printfile Manager (PFM) 28, der die verschiedenen Dateien des Dokuments verwaltet. Mit einem Ausgangskonverter 29 werden schließlich die Daten so umkonvertiert, daß sie von einer Schnittstelle 17 für ein Anwenderprogramm weiterverarbeitet werden können oder von einem Interface 19 für Drucker.

Ausgehend von dem Editor-Modul 11 besteht die Möglichkeit, bearbeitete Dokumentendaten in zwei verschiedenen Ausgabekanäle auszuleiten. Zum einen kann dies über die oben beschriebene Ausgabeschnittstelle zum Job-Submission Modul 12 erfolgen. Zum anderen kann dies über die Ausgabeschnittstelle 26 zu den Ausgabetreibern 27 erfolgen. Dabei kann vorgesehen sein, einen Ausgabetreiber für die Ansteuerung eines Druckers 14 vorzusehen, oder einen Ausgabetreiber zur Ausgabe der Dokumentendaten in eine Datei (Print to file) 30.

In Figur 4 ist der Prozess zur Erzeugung eines Druckauftrags gezeigt. Innerhalb des Dokumenteneditors 10 ist dazu vorgesehen, durch einen Funktionsaufruf aus dem Editierungsmodul 11 heraus das Auftragserzeugungsmodul 12 zu starten. Durch diesen Funktionsaufruf werden Auftragsparameter wie der Auftragsname und weitere Details, die später beschrieben werden, sowie IOCA-Daten vom Editierungsmodul 11 an das Auftragserzeugungsmodul 12 übergeben. Innerhalb des dabei aufgerufenen Auftragserzeugungsmoduls 12 werden des weiteren benutzerspezifische Angaben über ein Eingabefenster (siehe Figur 14) abgefragt, bevor der Auftrag in Form von IOCA-Daten oder einer speziellen Auftragsdatei (Job Ticket File, *.TIC) an den Printjob Manager bzw. das Order Distribution System 16 übergeben wird.

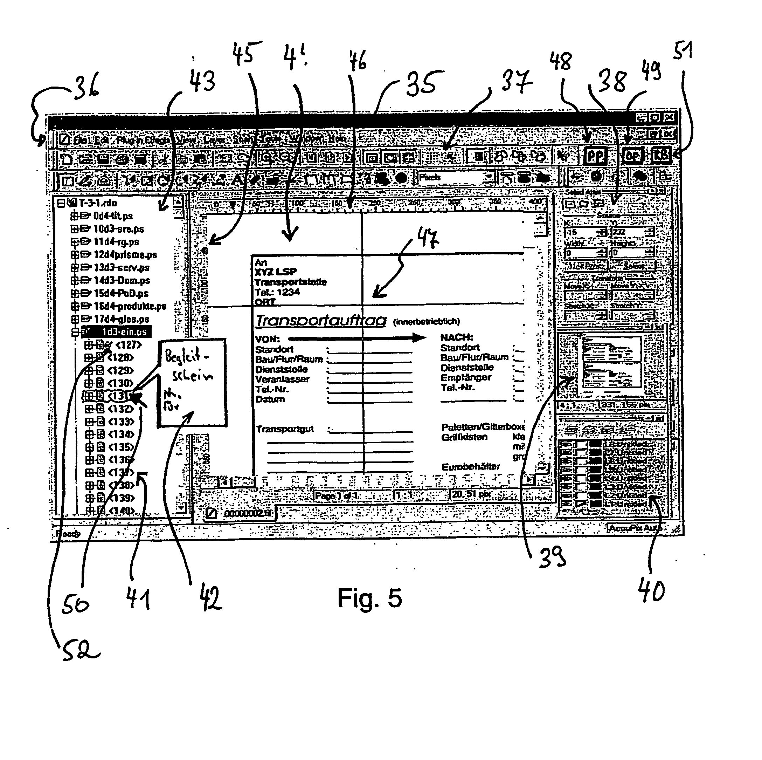

Figur 5 zeigt das Grund-Bearbeitungsfenster 35 , welches vom Editierungsmodul 11 auf dem grafischen Benutzerinterface (GUI) des Anwendungs-PC's 3, z.B. auf einem Monitor zur Anzeige gebracht wird.

Das gesamte Anzeigemenü ist in Anzeigeflächen und in Funktionsbereiche mit Schaltflächen unterteilt. In einem ersten Anzeigebereich 43 werden alle auf einem festgelegten Speicherbereich (z.B innerhalb eines Verzeichnisses auf einer Festplatte) gespeicherten Dateien, die zu einem Dokument zusammengeführt werden sollen, in einer baumartigen Struktur angezeigt. Beispielsweise sind die Dateien <127> <140> jeweils einzelne Seiten des Dokuments "1d3-ein.ps". Die Seite <127> wird dabei in einer mit einer mit dem menschlichen Auge gut erkennbaren Auflösung von etwa 200 dpi im Anzeigebereich 43 angezeigt. Je nach Auflösungs-Fähigkeit des Anzeigegerätes (Bildschirms) kann die Anzeige bis hin zur Original-Auflösung des Dokuments von z.B. 300 oder 600 dpi gesteuert werden. Die genaue Lage der Informationen relativ zu vorgelegten vorgegebenen Seitengrenzen ist durch Maßstäbe 45 und 46 erkennbar, deren Ablesung über ein Fadenkreuz 47 erleichtert wird.

Mit der Hauptmenüzeile 36 lassen sich verschiedene Funktionen und Untermenüs aufrufen und mit den Schaltflächen 37 Standardfunktionen (Tools) per Knopfdruck aufrufen. Im Bereich 38 (Tools Style Bar) lassen sich Spezialeinstellungen für stilisierte Objekte vornehmen. Im Überblicksfenster 39 wird jeweils die aktivierte Seite, hier Seite <127> vollständig angezeigt und markiert, welcher Teilbereich aktuell im Detail-Anzeigebereich 44 zu sehen ist. Im Layer Control-Bereich 40 ist zu erkennen, ob die aktuell angezeigte Seite verschiedene, überlagerte Schichten (Layers) hat. Jeder der Layer ist in einer frei wählbaren Farbe angezeigt, wobei wahlweise per Knopfdruck die entsprechenden Farben auch im Detail-Anzeigebereich 44 und im Überblicksfenster 39 zu erkennen sind.

Um das Navigieren innerhalb des gesamten Dokuments in dem Baumstruktur-Anzeigebereich 41 zu erleichtern, wird zu einer einzelnen Seite dynamisch ein Zusatzfenster 42, eine sogenanntes Thumbnail, geöffnet. In dem Thumbnail 42 wird ähnlich wie im Überblicksfenster 49 für die aktuell voll angezeigte Seite die jeweilige Seite in verkleinerter Darstellung aufgerastert gezeigt bzw. mit weitaus geringerer Auflösung als die Originalseite, z.B. etwa mit nur 50 dpi (bezogen auf die Original-Größe bzw. auf die vollständige Rasterinformation des Ausgangsdokuments). Das Thumbnail 42 erscheint automatisch und dynamisch, sobald mit dem Mauszeiger 50 die entsprechende Seitennummer berührt wird, im Beispiel der Figur 5 die Seite <131>. In der Thumbnailanzeige 42 können je nach Steuerungsausführung zusätzlich zum Dokumenteninhalt weitere Informationen zu der jeweiligen Seite angezeigt werden, beispielsweise die Seitengröße, deren Speicherplatz und/oder die Auflösung der Bildpunkte des hinterlegten Dokuments in Punkte pro inch (dpi). Die Thumbnail-Funktion ist recht hilfreich um durch die Baumstruktur zu wandern und bestimmte Seiten schnell ausfindig zu machen.

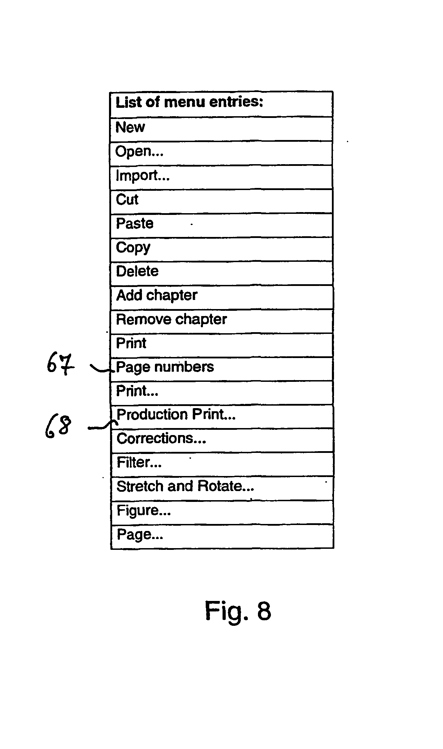

Ausgehend von dem Haupt-Bearbeitungsfenster 35 können diverse Untermenü-Fenster aufgerufen werden, siehe Figuren 8, 11 und 12.

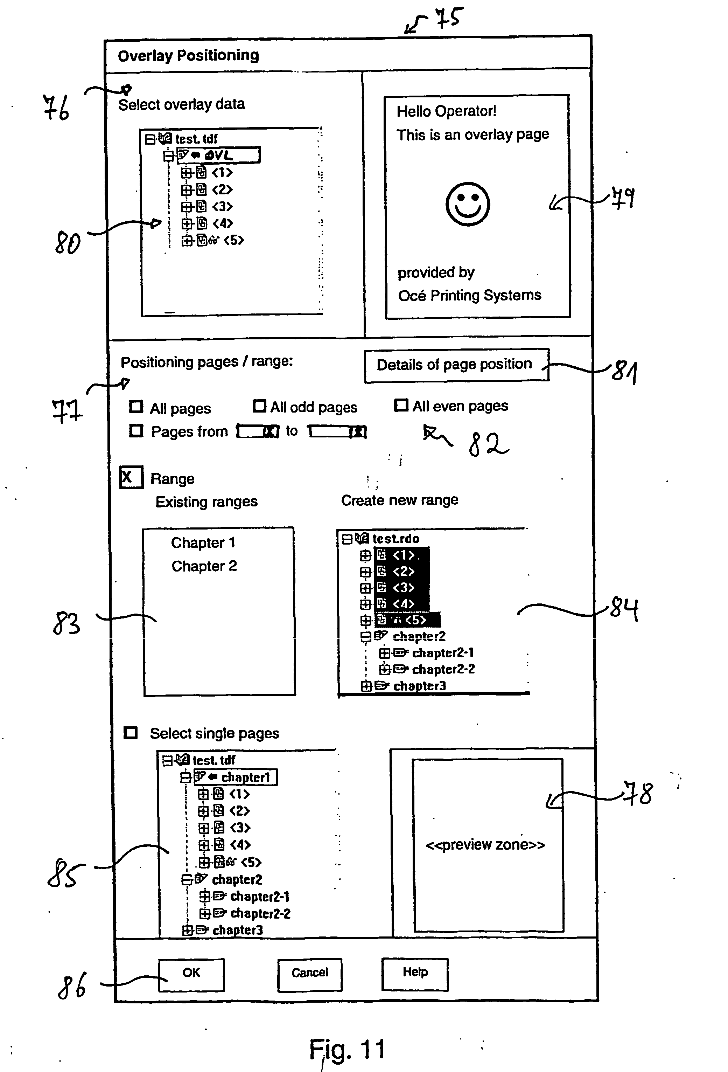

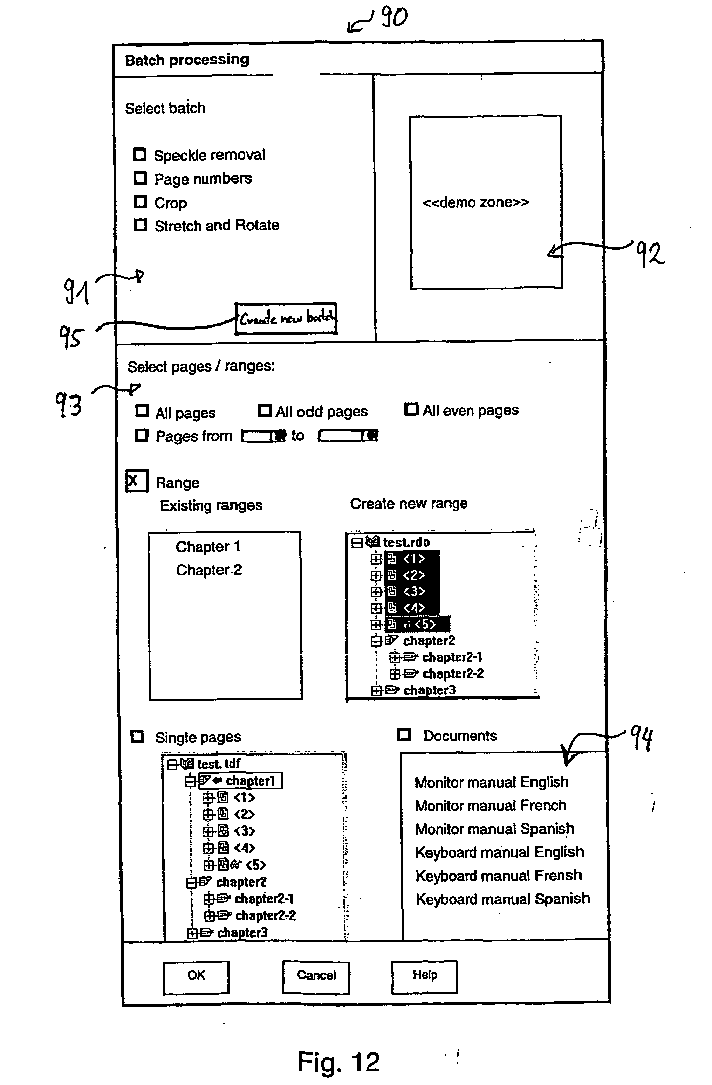

Innerhalb der Toolbar-Schaltfläche 37 ist mit den Schaltflächen 48 die Produktionsdruckanzeige der Figur 14 abrufbar, über die die Eingabe von Parametern zur Steuerung des Printjob Managers bzw. des order distribution system-Moduls 16 erfolgt. Mit der Schaltfläche 49 wird die Overlay Positioning-Schaltfläche der Figur 11 aktivierbar, über die die Zuordnung zwischen Overlays und Seitendaten erfolgt. Über die Schaltfläche 51 (Range Batch Processing) ist das Menü der Figur 12 aufrufbar, in dem die bereichsweise Abarbeitung von Automatik-Funktionen zur automatischen Bearbeitung von Bilddaten erfolgt. Mit dem Erkennungssymbol 52 (ein Brillensymbol) wird im Baum-Anzeigebereich 41 angezeigt, welche Seite aktuell innerhalb der Detail-Anzeige 44 angezeigt ist.

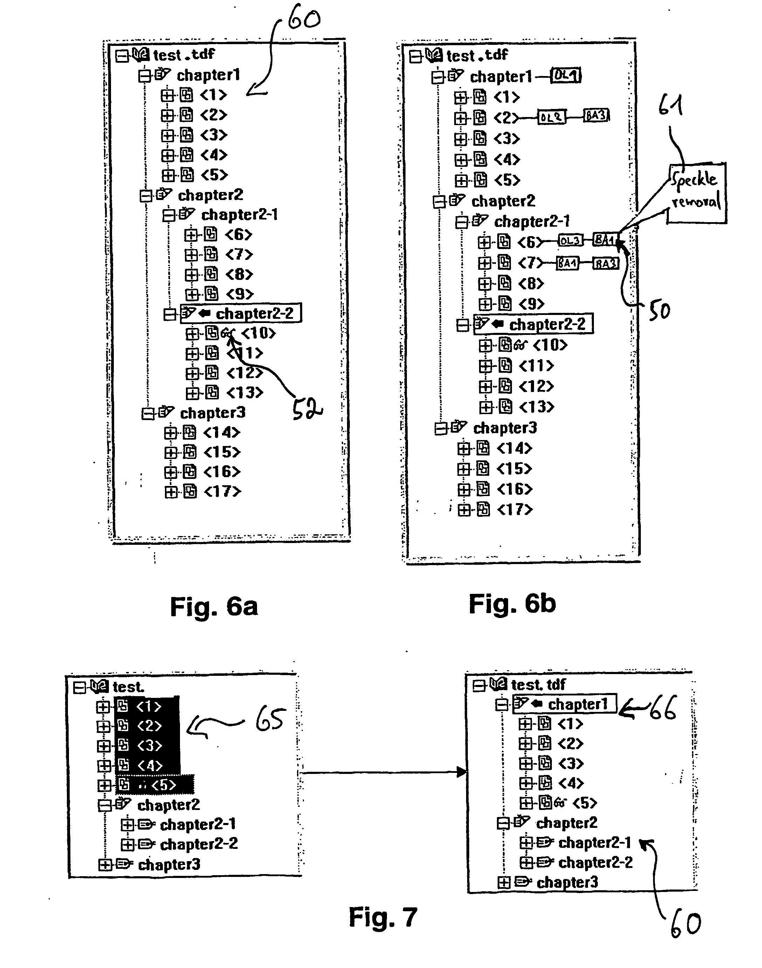

Figur 6a zeigt nochmals eine Baumstruktur 16, welche im Baumstruktur-Anzeigebereich 41 zur Anzeige kommt. Dabei sind Kapitel (chapter 1, chapter 2) eines Dokuments und entsprechende Unterkapitel (chapter 2-1, chapter 2-2) jeweils in eingerückter, strukturierter Form angezeigt und darunter die jeweils zugehörigen Einzelseiten aufgelistet. Figur 6b zeigt eine modifizierte Form, bei der jeweils zu einer strukturierten Einheit (einem vorher definierten Bereich) zugehörige overlay-Informationen und/oder Automatikaktions-Informationen (Batch information) zur Anzeige kommen. Bei dem in 6b gezeigten Beispiel ist erkennbar, daß alle Seiten des Kapitels 1 mit dem overlay "OL1" verbunden sind und beispielsweise zusätzlich Seite <2> mit dem Overlay "OL2" verbunden/überlagert ist, sowie von einem automatischen Batch "BA3" bearbeitet wird. Ähnlich wie bei der zuvor beschriebenen Thumbnail-Anzeige im Seitenbereich ist auch eine Thumbnail-Anzeige 61 für Overlays bzw. Batches dynamisch vorgesehen; sie wird angezeigt, sobald die entsprechende Overlay-Anzeige bzw. Batch-Anzeige mit dem Mauszeiger 50 berührt wird. Dabei wird entweder die jeweilige Overlay-Information oder eine Funktionsbeschreibung, z.B. specal removal, des entsprechenden Batches angezeigt. Durch Mausklick auf das Symbol einer einzelnen Seite innerhalb der Baumstruktur 60 wird diese Seite im Detail-Anzeigebereich 44 angezeigt und ist somit für weitere Bearbeitungsschritte hinsichtlich Bildpunktbearbeitung (pixel manipulation) und Seitenbearbeitung zugänglich. Die entsprechende Seite ist durch das Erkennungssysmbol 52 innerhalb der Baumstruktur 60 angezeigt.

Eine entsprechende Anzeige kann auch für ganze Seitenbereiche erfolgen. Dabei werden ganze Seitenbereiche entweder mit dem Mauszeiger 50 oder durch entsprechende Tastenfunktionen auf einer Tastatur (Shift-Taste und Control-Taste sowie entsprechende Pfeil-Bewegungstasten) markiert. Zu derart ausgewählten Bereichen wird nur jeweils die erste oder die letzte Seite des Bereiches im Detail-Anzeigebereich 44 angezeigt. Alle dem Bereich zugewiesenen Funktionen (Operationen) werden auf alle eine Seiten angewandt. Wenn ein Seitenbereich ausgewählt ist, dann werden solche Funktionen, die nicht auf ganze Bereiche angewandt werden können, z.B. die bildpunktweise Bearbeitung eines objekts, welches nur in einer einzigen Seite vorhanden ist, nicht zur Auswahl angeboten bzw. gesperrt.

Innerhalb eines Dokuments oder eines Bereiches des Dokuments kann die logische Abfolge der Seiten geändert werden. Einzelne Seiten, Seitengruppen oder Seitenbereiche können an verschiedene Positionen innerhalb des Dokuments verschoben werden. Dabei werden innerhalb der Speicherverwaltung für die hinterlegten Bilddaten nicht die physikalischen Daten in ihrer Reihenfolge verändert, sondern lediglich die Zuweisungen der jeweiligen Anfangsadressen in einer dem Dokument bzw. Bereich zugeordneten Zuweisungstabelle, die gesondert gespeichert ist.

In Figur 7 ist gezeigt, wie aus einer Gruppe markierter Seiten ein neues Kapitel erzeugt werden kann, d.h. der markierte Bereich 65 zu einem neuen Kapitel 66 wird. Dazu wird im Hauptmenü 36 der Menüpunkt "Edit" aufgerufen und Funktion "add chapter" aufgerufen. Dabei erscheint ein Bedienungsfenster, bei dem der Kapitelname eingegeben werden kann, so daß die Kapitelbezeichnung auch in der Baumstruktur 60 als Name erscheint.

In Figur 8 sind zusätzlich zum Menüpunkt "add chapter" einige andere Menüpunkte gezeigt, die für eine zügige Bearbeitung derartiger elektronischer Dokumente von Bedeutung sind. Beispielsweise wird mit dem Menüpunkt 67 "page numbers" ermöglicht, die Seitennummerierungen automatisch zu erzeugen. Mit dem Menüpunkt 68 "Production Print" wird die Verbindung zum Druckproduktionsmodul 16 (Printjob Manager und Order Distribution System) direkt hergestellt. In einem Druckproduktions- Arbeitsprozess (Print produktion work flow) ist es von großer Bedeutung, Seitenbereiche weitgehend automatisch bearbeiten zu können. Beispielsweise ist die genaue Positionierung der Druckdaten auf der Seite ein aufwendiger Prozeß, der dadurch wesentlich beschleunigt werden kann, daß bestimmte seitenbezogene Angaben für das gesamte Dokument, d.h. für alle Seiten oder zumindest für einen bestimmten Bereich des Dokuments, z.B. für Kapitel, gelten. Eine solche bereichsweise Zuordnung kann bereits bei der Erzeugung des Dokuments erfolgen, selbst wenn die einzelnen Dokumentenseiten jeweils einzeln aufgerastert sind. Dabei ist es insbesondere vorteilhaft, folgende Zuordnungen zu ermöglichen:
einzelne Seiten, z.B. Seiten 1,5,9, wobei eine bestimmte Zuordnung bzw. automatische Bearbeitung auf den Seiten 1, 5 und 9 erfolgt
   Seitenbereiche, beispielsweise Seiten 1-10
   Abgestufte Zuordnung, z.B. Seiten 1-50: 2 d.h. eine Operation bzw. Zuordnung wirkt auf jede zweite Seite innerhalb des Bereiches zwischen den Seiten 1-50. Eine derartige Operation ist z.B. vorteilhaft um Vorderseiten und Rückseiten jeweils unterschiedlich zu behandeln Kombination aus den oben genannten Zuordnungen.

Im Zuge der bereichsweisen oder auch seitenweisen automatischen Bearbeitung können diverse Funktionen vorgesehen sein, wie sie z.B. in Figuren 11 und 12 beschrieben sind.

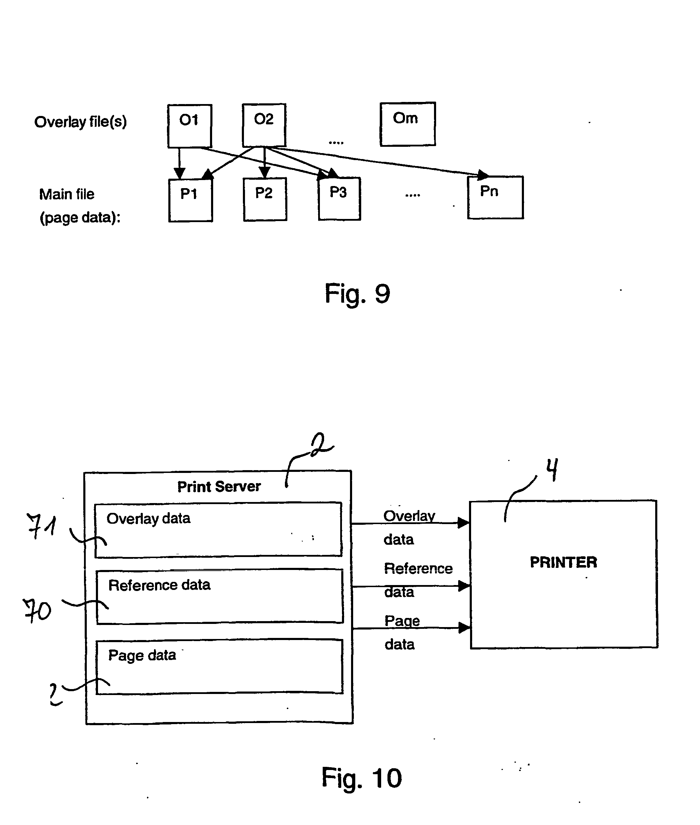

Anhand der Figuren 9 bis 11 wird nun beschrieben, wie Bilddaten einer ersten Seite oder einer ersten Gruppe von Seiten mit Overlay-Daten verbunden werden. Figur 9 zeigt das logische Prinzip bei der Zuordnung von Overlay-Daten zu Seitendaten. Die Seitendaten umfassen dabei die Seiten P1, P2 ... Pn und die Overlay-Daten O1, O2 ... Om. Jeder Seite können also maximal m Overlays zugeordnet werden und jedem Overlay maximal n Seiten, wobei m,n jeweils positive ganze Zahlen sind. Die logische Zuordnung der Seiten erfolgt, wie in Figur 10 dargestellt, innerhalb des Druckservers 2 in einem Referenzdatenspeicher 70, wobei wiederum eine Zuordnung zu entspechenden Bereichen bzw. Einzelseiten getroffen sein kann. Die Overlay-Daten sind davon getrennt im Speicher 71 und die Seitendaten im Speicher 72 abgelegt. Durch die entsprechende Zuordnung von Referenzdaten zwischen den Overlay-Daten und den Seitendaten ist es möglich, den Datentransfer vom Druckserver 2 an den Drucker 4 wesentlich dadurch zu entlasten, daß die Seitendaten, die Referenzdaten und die Overlay-Daten jeweils voneinander getrennt vom Druckserver an den Drucker übertragen werden. Dies ermöglicht, jeden dieser Datensätze jeweils nur einmal zu übertragen, d.h. die Daten eines Overlays jeweils nur einmal vom Druckserver 2 an den Drukker 4 zu übertragen. Gegenüber herkömmlichen Verfahren, bei denen jede Seite zusammen mit jeweils allen zugehörigen Overlays übertragen wurde, entlastet dies den Datentransfer vom Druckserver 2 zum Drucker 4 erheblich, weil Overlay-Daten und/oder Seitendaten, die mehrmals identisch in dem Dokument vorkommen, nur einmal überlagert werden müssen. Dieser Vorteil wird vor allem erreicht, wenn n oder m jeweils ganze Zahlen größer 2 sind.

Ein Overlay kann dabei entweder ein Bildelement, welches in einer Seite positioniert ist oder auch eine ganze Seiteninformation umfassen. Innerhalb der Referenzdaten 70 werden die entsprechenden Daten zu jedem Overlay hinterlegt, z.B. seine Größe, sein Name, seine Position innerhalb einer Seite sowie der Seitenbereich bzw. die einzelnen Seiten, denen dieses overlay zugeordnet ist. Ein Overlay kann dabei n Seiten zugeordnet sein und eine Seite jeweils m Overlays.

Sowohl die Layer O1 bis On als auch die Seiten P1 bis Pn können gemeinsam in einer einzigen IOCA-Datei gespeichert sein. Vorteilhaft ist jedoch die in Figur 10 gezeigte, separate Speicherung in Speicherbereichen 71,72 in verschiedenen IOCA- Dateien.

Innerhalb des Dokumenteneditors 10 (vgl. Figuren 2, 3 und 4) erfolgt die Speicherung bereits im Editierungsmodul 11, wobei die entsprechenden Daten dann vom Editierungsmodul 11 an das Job Submission Modul 12 übergeben werden, bevor sie an den Printserver 2 bzw. an den Drucker 4 übertragen werden.

In Figur 11 ist ein Auswahlmenü- und Zuordnungsfenster 75 gezeigt, welches aus dem Editor-Modul 11 über die Schaltfläche 49 (Figur 5) aufrufbar ist. Das Zuordnungsfenster 75 weist einen ersten Bereich 76 auf, in dem die Overlay-Daten ausgewählt werden können. In einem zweiten Bereich 77 wird die Positionierung der jeweiligen Overlay-Daten innerhalb der jeweiligen Seiten und die Zuordnung zu den entsprechenden Seiten bzw. Bereichen angezeigt. In einer Zone 99 wird das aktuell ausgewählte Overlay, hier das in der Baumstruktur 80 angezeigte Overlay Nr. <5> vollständig angezeigt. Sobald ein Overlay ausgewählt ist, kann über die Schaltfläche 81 die detaillierte Positionierung des Overlays auf den jeweiligen Seiten festgelegt werden, z.B. der Abstand des Overlays von den jeweiligen Seitenrändern, seine genaue Position und/oder eine Vergrößerung bzw. Verkleinerung der Overlay-Information innerhalb der Seite.

Zusätzlich wird für jedes Overlay festgelegt, welchen Seiten es zugeordnet ist. Dazu können über Seitenauswahl-Felder 82 alle Seiten, alle geraden oder ungeraden Seiten oder ein bestimmter Seitenbereich nummernmäßig angegeben werden. Alternativ dazu kann auch ein bereits bestehender Bereich beispielsweise ganze Kapitel über den Kapitel-Auswahlbereich 83 ausgewählt werden. Auch eine Neubildung von Bereichen kann in einem Bereich 84 erfolgen und die Overlays diesem neuen Bereich zugeordnet werden. Durch die Zuordnung werden Zuordnungsdaten geschaffen, durch die die spätere, geschwindigkeitsoptimierte, einmalige Übertragung der Overlay- und der Seitendaten möglich ist, sowie deren seitengenaue Zusammensetzung und Repositionierung innerhalb des Druckservers.

Schließlich können einzelne Seiten über den Einzel-Auswahlbereich 85 dem jeweiligen Overlay zugeordnet werden, wobei in der Überlagerungs-Anzeigezone 78 für die jeweils ausgewählte Seite eine erste Kontrolle der Overlay-Überlagerung visuell erfolgen kann.

Über dem Schaltknopf 86 wird die Zuordnung abgeschlossen und die entsprechenden Zuordnungs-Parameter gespeichert. Diese gespeicherten Daten werden im späteren Druckjob-Verarbeitungsprozeß durch den Printjob Manager 16, das Order Distribution System und/oder den Professional Document Composer 13 bzw. dem Professional Document Viewer so weiterverarbeitet, daß mit den entsprechenden Systemen die korrekte Zuordnung zwischen Overlays und Seiten sowohl seitenweise als auch innerhalb der Seite erfolgen kann.

In Figur 12 ist ein Zuordnungsfenster 90 zur Zuordnung vorgegebener, automatischer Bearbeitungsprozesse zu einzelnen Seiten, Bereichen oder Dokumenten gezeigt. Auch dieses Fenster ist vom Bearbeitungsfenster 35 über den Schaltknopf 51 direkt aufrufbar. Innerhalb des Fensters 90 sind zunächst im Auswahlfeld 91 die entsprechenden automatisierten Verarbeitungsvorgänge wie z.B. Entfernung von Bildflecken "specal removal", die automatische Seitennummerierung, die automatische Zentrierung auf der Seite (cropping) sowie Ausdehnungs- oder Drehungsfunktionen aufrufbar. Im Demonstrationsfeld 92 werden die jeweiligen Funktionen grafisch veranschaulicht oder zumindest durch Erklärungen beschrieben.

Im Auswahlbereich 93 werden sodann diejenigen Seiten, Bereiche oder Dokumente ausgewählt, in denen der jeweilige automatisierte Vorgang (Batch) ablaufen soll. Wie bereits im Feld 75 kann dabei zwischen seitenweisen und bereichsweisen Einstellungen gewählt werden. Zusätzlich kann in der Zone 94 auch eine Zuordnung für komplette Dokumente oder auch mehrere Dokumente erfolgen. Hierdurch wird der Bildbearbeitungsvorgang für ganze Dokumente weiter beschleunigt. Über die Schaltfläche 95 können neue automatische Aktionen gebildet bzw. aus bekannten Aktionen zusammengesetzt werden. Dabei kann außerdem vorgesehen sein, bereits zusammengesetzte Automatik-Aktionen (Batches) inklusive der ihr zugeordneten Bereichs-Angaben komplett in einem neu zu erzeugenden Batch zu übernehmen.

In Figur 13 ist ein Basis-Fenster des Print Job Managers 16 gezeigt, der durch den Funktionsaufruf 68 in Figur 8 gestartet wird. Im Bereich 101 sind die wesentlichen Angaben zu einem Druckjob wie der Jobname, die Anzahl der zu erstellenden Kopien, der anzusteuernde Drucker usw. angegeben. Im Feld 102 sind Job Attribute angegeben und im Feld 103 sind alle aktiven, d.h. derzeit zum Drucken in Bearbeitung befindlichen Aufträge sowie alle bereits abgearbeiteten Aufträge aufgelistet. Im Fenster 104 sind die zu einem aktuell ausgewählten Job gehörenden Dateien aufgelistet.

In Figur 14 ist ein Auswahlmenü 110 gezeigt, welches ebenfalls aus dem Menüpunkt 68 (Production Print) der Figur 8 aufrufbar ist. Dabei sind verschieden Parameter einstellbar, die zur Abarbeitung eines zu einem kompletten Dokument gehörenden Druckauftrages gehören wie die Ausschießschemen des Professional Document Composers, der Printmodus (simplex, duplex, tumble) sowie das Einfügen von Sonderblättern wie Deckblättern und Trennblättern. Weitere Angaben zum Seitensetup (Papiergröße, Papierorientierung, Ränder, etc.) sowie Zusatzeinstellung für Nachverarbeitungsgeräte des Druckers wie Heftungseinrichtung, Barcode-Beschrifter usw. sind eingebbar. Auch die für den Printjob Manager nötigen Informationen wie Printjob Name, Printername, Zahl der Kopien usw. sind über dieses Einstellmenü angebbar.

Es wurden Ausführungsbeispiele der Erfindung beschrieben. Dabei ist klar, daß die Erfindung jederzeit mit an sich bekannten Funktionalitäten verbindbar ist. Die Erfindung ist insbesondere in einem Druckproduktionsumfeld einsetzbar und umfasst Geräte wie Computer, Drucker, aber auch Steuerungs-Software (Computerprogramme und deren Module) bzw. Computer-Programmprodukte wie z.B. Dateien und flüchtige sowie nicht-flüchtige Datenspeicher, die beim Laden auf einem Computer die oben beschriebenen Abläufe bewirken.

Obwohl die Übernahme der gerasterten Seiten- und Overlay-daten sowie der Referenzierungs- bzw. Indizierungsdaten von dem Dokumentenerstellungsprogramm am Beispiel eines Druckproduktionssystems beschrieben wurde, könnte diese Übergabe auch an ein anderes Dokumentenmanagement system erfolgen und dabei zu einer hohen Übertragungsgeschwindigkeit führen. Beispielsweise kann eine solche Übernahme im Zuge der Übertragung der gerasterten Daten in einem Netzwerk (LAN, WAN) von einem elektronischen System (Server, email-Programm, Dokumentenmanganent-Programm) zu einem entsprechenden oder sogar identischen zweiten Programm sehr vorteilhaft sein.

### Zusammenfassend läßt sich feststellen:

Die Erfindung betrifft ein Verfahren und ein System zur Bearbeitung von seitenweise gerasterten Bilddaten zur Erzeugung eines elektronischen, strukturierten Dokuments. Die Bearbeitungs-Funktionsmodule sind mit einem Druckprpoduktions-System, das mehrere Untermodule (Print Job Manager, Order Distribution System) enthält, funktionell derart gekoppelt, dass bei der Erstellung des Dokuments und bei dessen Weiterleitung an das Druckproduktionssystem ein zeitoptimierter Arbeitsablauf erreicht wird. Es erfolgt eine speicheroptimierte Art der Überlagerung von Bilddaten durch logische Zuordnung von Overlaydaten an seitenweise Daten oder Datenbereiche. Weiterhin sind zusätzliche Funktionen vorgesehen wie die dynamische Anzeige von Informationen über einzelne Dokumentseiten und/oder von Bearbeitungs-Informationen zu den jeweiligen Dokumentseiten. Auch eine bereichsweise Bearbeitung der Daten ist vorgesehen.

### Bezugszeichenliste

- 1: Zentralcomputer
- 2: Print Server
- 3: Anwendungscomputer
- 4: Drucker
- 10: Dokumenten-Editor
- 11: Editor-Modul
- 12: Job Submission Modul
- 13: Professional Document Composer
- 14: Professional Document Viewer
- 15: Scan Modul
- 16: Print Job Manager
- 17: Schnittstelle für Anwenderprogramm
- 18: Druckproduktionsmodul
- 19: Schnittstelle zu Drucker
- 20: Sprachkonverter
- 21: IOCA-Konverter
- 22: Lesemodul
- 23: Dateneingang
- 24: Datenausgang
- 25: Konvertierungsmodul
- 26: Ausgabe-Schnittstelle
- 27: Druckertreiber
- 28: Print File Manager
- 29: Output Converter
- 30: Druckausgabe-Datei
- 35: Bearbeitungsfenster
- 36: Hauptmenü
- 37: Toolbar (Schaltflächen)
- 38: Toolstyle bar
- 39: Überblicks-Fenster
- 40: Layer Control-Bereich
- 41: Baumstruktur-Anzeigebereich
- 42: Thumbnail-Anzeige
- 43: Baum-Anzeigebereich
- 44: Detail-Anzeigebereich
- 45: Vertikales Lineal
- 46: Horizontales Lineal
- 47: Fadenkreuz
- 48: Production Print Schaltfläche
- 49: Overlay Positioning Schaltfläche
- 50: Mauszeiger
- 51: Range Batch Processing Schaltfläche
- 52: Erkennungssymbol für die aktuell im Fenster 44 angezeigte Seite
- 60: Baumstruktur
- 61: Batch-Thumbnail
- 65: markierter Bereich
- 66: Kapitel
- 67: Pagenumbers
- 70: Referenzdatenspeicher
- 75: Overlay-Zuordnungsfenster
- 76: Overlay-Auswahlbereich
- 77: Overlay-Positionierungsbereich
- 78: Übertragungs-Anzeigefeld
- 79: Overlay-Anzeigefeld
- 80: Overlay-Verzeichnis
- 81: Overlay-Positionierungs-Schaltfläche
- 82: Seitenauswahl-Felder
- 83: Kapitelauswahl-Bereich
- 84: Kapitel-Neuzuordnungsbereich
- 85: Einzelseiten-Auswahlbereich
- 86: Betätigungs-Schaltfläche
- 90: Batch-Zuordnungsfenster
- 91: Batch-Auswahlfeld
- 92: Batch-Demofeld
- 93: Batch-Bereichsauswahl
- 94: Batch-Dokumentenauswahl
- 95: Schaltfläche für neuen Batch
- 100: PJM-Basisfenster
- 101: Job parameter-Fenster
- 102: Job attribut-Fenster
- 103: Job Fenster
- 104: File Fenster
- 110: Auswahlmenü

- O1...On: Overlays
- P1...Pm: Seiten

## Patentansprüche

1. Verfahren zum Bildschirm-gestützten Erstellen eines elektronischen Dokuments aus gerasterten Bilddaten in einem Anwendungs-Computer (3), bei dem
- die Bilddaten in mindestens einem elektronischen Speicher (72) abgelegt werden,
- eine erste, seitenweise gespeicherten Gruppe von Bilddaten (P1...Pn), die mehrere Seiten umfaßt, einer zweiten Gruppe von Overlay-Bilddaten (O1...Om) im Verhältnis 1:n oder m:1 derart zugeordnet wird, dass einer Seite (P1, P2,..., Pn) je mindestens ein overlay (O1, O2,..., Om) oder einem Overlay je mindestens eine Seite zugeordnet wird und wobei n und m jeweils ganze zahlen größer als 2 sind,
- die Bilddaten der beiden Gruppen (P1...Pn; O1...Om) durch Referenzierungsdaten miteinander verknüpft werden,
- wobei die Overlay-Daten und die Referenzierungsdaten zum Ausdrucken des Dokuments jeweils nur einmal an ein Druckproduktions-Steuerungs-Modul (PJM, 16) übertragen werden,
- in einem ersten Bildschirmbereich (41) Symbole (<1>, <2>,...) der ersten Gruppe seitenweise in einer geordneten Struktur (60) angezeigt werden,
- in einem zweiten Bildschirmbereich (44) Bilddaten (P1...Pn) der ersten Gruppe im Detail angezeigt werden und
- das Dokument mittels eines in dem Anwendungs-computer (3) geladenen Editor-Computerprogramms (10) bearbeitet wird.

2. Verfahren nach Anspruch 1, wobei die erste Gruppe (P1...Pn) unabhängig von der zweiten Gruppe (O1...Om) in einem Speicher (71) gespeichert wird.

3. Verfahren nach Anspruch 2, wobei die erste Gruppe (P1...Pn) unabhängig von der zweiten Gruppe (O1...Om) von einem ersten Gerät (PC, 3) in ein zweites Gerät (2,4) übertragen wird und die zweite Gruppe (O1...Om) erst für eine Anzeige oder für einen Ausdruck jeder einzelnen Seite mit der ersten Gruppe (P1...Pn) überlagert wird.

4. Verfahren nach einem der vorhergehenden Ansprüche, wobei eine gemeinsame Speicherung der Overlay-Daten (O1...Om) und der seitenweisen Bilddaten (P1...Pn) als einzelnes IOCA-Document erfolgt.

5. Verfahren nach einem der vorhergehenden Ansprüche, wobei die Zuordnung derart erfolgt, dass die ersten Bilddaten jeweils eine Dokumentseite sind und dass die zweiten Bilddaten ein Overlay sind, denen jeweils eine Positionsinformation zur Überlagerung mit den ersten Bilddaten zugeordnet sind.

6. Verfahren nach einem der vorhergehenden Ansprüche, wobei
- jeweils eine Gruppe von Bilddaten (ranges) zur Bearbeitung ausgewählt werden,
- der Gruppe von Bilddaten mindestens ein Attribut zugeordnet wird,
- ein automatisierter Bearbeitungsprozess (Batch, makro) aus mehreren auswählbaren Prozessen ausgewählt oder zusaminengestellt wird und
- die Gruppe von Bilddaten mit dem ausgewählten Bearbeitungsprozess bearbeitet wird.

7. Verfahren nach Anspruch 6, wobei die Attribute die Zuordnung zu Overlays und/oder die Zuordnung zu automatischen Bearbeitungsprozessen umfassen.

8. Verfahren nach einem der vorhergehenden Ansprüche, wobei im ersten Bildschirmbereich (41) bei Berührung eines Symbols (<1>, <2>, ...) mit einem Auswahlmittel (50) der Inhalt der zugeordneten Dokumentenseite (P1...Pn) in einem gesonderten Anzeigebereich (42) angezeigt wird.

9. verfahren nach Anspruch 8, wobei Attribute der Bilddaten wie Speichergröße, Auflösung in dem ersten Bildschirmbereich (41) angezeigt werden.

10. Verfahren nach einem der vorhergehenden Ansprüche, wobei eine verbindung von einem den Verfahrensablauf bewirkenden Dokumenteneditierungsmodul (11) zu einem Druckproduktions-Steuerungs-Modul (PJM, 16) hergestellt wird.

11. Verfahren nach Anspruch 8 , 9 oder 10 wobei druckspezifische Daten übergeben werden wie Seiten-Kompositionsdaten (simplex, duplex, tumble), Druck-Nachverarbeitungsdaten (stitching, binding) und/oder job submission Daten (job name).

12. Verfahren nach Anspruch 11, wobei job submission Daten (job ticket) als solche gesondert **gekennzeichnet** sind und vom Drucksystem und/oder der Druckproduktions-Steuerungs-Modul (16) erst verarbeitet werden, wenn der Druckvorgang zu einem Druckgerät (4) angestoßen wird.

13. Verfahren nach einem der Ansprüche 10 bis 12, wobei die Bilddaten einer Druckvorrichtung (4) zugeführt und dort ausgedruckt werden.

14. Verfahren nach einem der vorhergehenden Ansprüche, wobei die Daten zumindest teilweise im TIFF-Format verarbeitet werden.

15. Verfahren nach einem der vorhergehenden Ansprüche, wobei die Bilddaten zur Voll-Anzeige in einem zweiten Anzeigebereich (44) eines Anzeigemittels seiten- oder bereichsweise gesondert auswählbar sind.

16. Verfahren nach einem der vorhergehenden Ansprüche, wobei den Bilddaten innerhalb des Dokuments eine Seitenreihenfolge zugeordnet wird, die bildsegmentweise durch logische Attribute, wie Seitennummer, vorgegeben ist.

17. Verfahren nach Anspruch 16, wobei die Reihenfolge innerhalb der Gruppe oder Untergruppe derart verändert werden kann, das nur die logische Zuordung geändert wird, aber nicht der Speicherort im Speicher (70, 71, 72).

18. Drucksystem mit Mitteln, die ein Verfahren nach einem der Ansprüche 1 bis 17 durchführen.

19. Computer mit Mitteln, die ein Verfahren nach einem der Ansprüche 1 bis 17 durchführen.

20. Computerprogramm, das auf einem Computer einen Verfahrensablauf nach einem der Ansprüche 1 bis 17 bewirkt, wenn es auf dem Computer abläuft.

## Claims

1. Method for the screen-aided generation of an electronic document from scanned image data in an application computer (3), in which
- the image data are filed in at least one electronic storage (72),
- a first group of image data (P1...Pn) stored page by page that comprises a plurality of pages is associated such with a second group of overlay image data (O1...Om) in the relationship of 1:n or m:1 that one page (P1, P2, ..., Pn) is associated with at least one overlay (O1, O2, ..., Om) or one overlay is associated with at least one page, and wherein n and m are respectively whole numbers greater than 2,
- the image data of both groups (P1...Pn; O1...Om) are connected with one another via referencing data,
- wherein the overlay data and the referencing data are respectively transmitted only once to a print production control module (PJM, 16) to print the document,
- in a first display screen area (41) symbols (<1>, <2>,...) of the first group are displayed page by page in an arranged structure (60),
- in a second display screen area (44) image data (P1...Pn) of the first group are displayed in detail, and
- the document is edited by means of an editor computer program (10) loaded into the application computer (3).

2. Method according to claim 1, wherein the first group (P1...Pn) is stored in a storage (71) independent of the second group (O1...Om).

3. Method according to claim 2, wherein the first group (P1...Pn) is transferred independent of the second group (O1...Om) from a first device (PC, 3) to a second device (2, 4), and the second group (O1...Om) is only superimposed with the first group (P1...Pn) for a display or for a printing of each individual page.

4. Method according to one of the preceding claims, wherein a common storage of the overlay data (O1...Om) and the per-page image data (P1...Pn) takes place as a single IOCA document.

5. Method according to one of the preceding claims, wherein the association takes place such that the first image data are respectively a document page, and that the second image data are an overlay, with which is respectively associated a position information for superimposition with the first image data.

6. Method according to one of the preceding claims, wherein
- respectively one group of image data (ranges) are selected for processing,
- at least one attribute is associated with the group of image data,
- an automatic processing process (batch, macro) is selected or assembled from a plurality of selectable processes, and
- the group of image data is processed with the selected processing process.

7. Method according to claim 6, wherein the attributes comprise the association with overlays and/or the association with automatic processing processes.

8. Method according to one of the preceding claims, wherein in the first display screen area (41) the content of the associated document page (P1...Pn) is displayed in a separate display area (42) given contact of a symbol (<1>, <2>, ...) with a selection means (50).

9. Method according to claim 8, wherein attributes of the image data such as storage size, resolution are displayed in the first display screen area (41).

10. Method according to one of the preceding claims, wherein a connection is produced from a document editing module (11) effecting the method sequence to a print production control module (PJM, 16).

11. Method according to claim 8, 9, or 10, wherein print-specific data are transferred, such as page composition data (simplex, duplex, tumble), print post-processing data (stitching, binding) and/or job submission data (job name).

12. Method according to claim 11, wherein job submission data (job ticket) are separately indicated as such and are only processed by the print system and/or the print production control module (16) when the print event is triggered at a print device (4).

13. Method according to one of the claims 10 to 12, wherein the image data are supplied to a print device (4) and are printed out thereat.

14. Method according to one of the preceding claims, wherein the data are at least partially processed in the TIFF format.

15. Method according to one of the preceding claims, wherein the image data can be selected per-page or per-region for full display in a second display area (44) of display means.

16. Method according to one of the preceding claims, wherein a page sequence that is predetermined per image segment via logical attributes such as page number is associated with the image data within the document.

17. Method according to claim 16, wherein the sequence within the group or subgroup can be changed such that only the logical association is changed, but not the storage location in the storage (70, 71, 72).

18. Printing system with means which implement a method according to one of the claims 1 to 17.

19. Computer with means which implement a method according to one of the claims 1 to 17.

20. Computer program which effects a method sequence according to one of the claims 1 to 17 on a computer when it is run on the computer.

## Revendications

1. Procédé de création à l'écran d'un document électronique constitué de données d'images matricielles dans un ordinateur d'application (3), dans lequel
- les données d'images sont déposées dans au moins une mémoire électronique (72),
- un premier groupe, enregistré par page, de données d'images (P1... Pn), qui comprend plusieurs pages, est affecté à un deuxième groupe de données d'images superposées (O1... Om) selon un rapport 1/n ou m/1, de telle sorte qu'à une page (P1, P2,..., Pn), on affecte chaque fois au moins une superposition (O1, O2,..., Om), ou à une superposition, on affecte chaque fois au moins une page, et les nombres n et m étant respectivement des nombres entiers supérieurs à 2,
- les données d'images des deux groupes (P1...Pn ; O1... Om) sont reliées les unes aux autres par des données de référencement,
- moyennant quoi les données de superposition et les données de référencement, permettant d'imprimer le document, ne sont respectivement transmises qu'une fois à un module de commande de production d'impression (PJM 16),
- dans une première zone d'écran (41), les symboles (<1>, <2>,...) du premier groupe sont affichés par page selon une structure ordonnée (60),
- dans une deuxième zone d'écran (44), les données d'images (P1...Pn) du premier groupe sont affichées en détail, et
- le document est traité à l'aide d'un programme informatique d'édition (10) chargé dans l'ordinateur d'application (3).

2. Procédé selon la revendication 1, dans lequel le premier groupe (P1...Pn) est enregistré indépendamment du deuxième groupe (O1...Om) dans une mémoire (71).

3. Procédé selon la revendication 2, dans lequel le premier groupe (P1...Pn) est transféré d'un premier appareil (PC, 3) à deuxième appareil (2, 4) indépendamment du deuxième groupe (O1...Om), et le deuxième groupe (O1...Om) est seulement superposé au premier groupe (P1... Pn) pour un affichage ou l'impression de chaque page individuelle.

4. Procédé selon l'une quelconque des revendications précédentes, dans lequel un enregistrement commun des données de superposition (O1... Om) et des données d'images par page (P1... Pn) est réalisé sous la forme d'un seul document IOCA.

5. Procédé selon l'une quelconque des revendications précédentes, dans lequel l'affectation est réalisée de telle sorte que les premières données d'images sont respectivement une page de document, et que les deuxièmes données d'images sont une superposition, auxquelles est respectivement affectée une information de position permettant la superposition aux premières données d'images.

6. Procédé selon l'une quelconque des revendications précédentes, dans lequel :
- respectivement un groupe de données d'images (gammes) est choisi pour le traitement,
- au groupe de données d'images est affecté au moins un attribut,
- un processus de traitement automatisé (batch, macro) est choisi entre plusieurs processus pouvant être sélectionnés, ou est constitué de ceux-ci, et
- le groupe de données d'images est traité grâce au processus de traitement choisi.

7. Procédé selon la revendication 6, dans lequel les attributs comprennent l'affectation aux superpositions et / ou l'affectation aux processus de traitement automatiques.

8. Procédé selon l'une quelconque des revendications précédentes, dans lequel, dans une première zone d'écran (41), en appuyant sur un symbole (<1>, <2>,...) avec un moyen de sélection (50), le contenu de la page de document associée (P1...Pn) est affiché dans une zone d'affichage (42) particulière.

9. Procédé selon la revendication 8, dans lequel des attributs des données d'images tels que la place occupée en mémoire, la résolution, sont affichés dans la première zone d'écran (41).

10. Procédé selon l'une quelconque des revendications précédentes, dans lequel une liaison est établie entre un module d'édition de documents (11) provoquant le déroulement de l'un des procédés et un module de commande de production d'impression (PJM, 16).

11. Procédé selon l'une quelconque des revendications 8, 9 ou 10, dans lequel des données spécifiques à l'impression sont transmises, telles que les données de composition de page (simplex, duplex, tête-bêche), des données de traitement ultérieur à l'impression (piquage, reliure) et / ou des données de soumission de tâche (nom de la tâche).

12. Procédé selon la revendication 11, dans lequel des données de soumission de tâche (fiche sur la tâche) sont **caractérisées** de manière spécifique en tant que telles, et ne sont traitées par le système d'impression et / ou le module de commande de production d'impression (16), que lorsque le processus d'impression est lancé dans un appareil d'impression (4).

13. Procédé selon l'une quelconque des revendications 10 à 12, dans lequel les données d'images sont délivrées à un dispositif d'impression (4), et imprimées à cet endroit.

14. Procédé selon l'une quelconque des revendications précédentes, dans lequel les données sont au moins en partie traitées au format TIFF.

15. Procédé selon l'une quelconque des revendications précédentes, dans lequel les données d'images devant être affichées intégralement peuvent être choisies dans une deuxième zone d'affichage (44) d'un moyen d'affichage, de manière spécifique, soit par page, soit par zone.

16. Procédé selon l'une quelconque des revendications précédentes, dans lequel, aux données d'images, à l'intérieur du document, est affectée une série de pages, qui est par exemple prédéfinie par segment d'image, grâce à des attributs logiques tels que des numéros de page.

17. Procédé selon la revendication 16, dans lequel la série à l'intérieur du groupe ou du sous-groupe peut être modifiée, de telle sorte que seule l'affectation logique est modifiée, mais pas l'emplacement d'enregistrement dans la mémoire (70, 71, 72).

18. Système d'impression comportant des moyens qui mettent en oeuvre un procédé selon l'une quelconque des revendications 1 à 17.

19. Ordinateur comportant des moyens mettant en oeuvre un procédé selon l'une quelconque des revendications 1 à 17.

20. Programme informatique, qui provoque un déroulement de procédé sur un ordinateur selon l'une quelconque des revendications 1 à 17, lorsqu'il est exécuté sur l'ordinateur.
